# EUROPÄISCHE PATENTANMELDUNG

(11) **EP 1 052 823 A2**
(43) Veröffentlichungstag der Anmeldung: **15.11.2000**
(21) Anmeldenummer: 00110105.4
(22) Anmeldetag: 09.05.2000
(51) Int. Cl.: H04L 27/36

(54) **Linearisierung der Verstärkung von phasen- und amplitudenmodulierten Signalen**

(30) Priorität: 11.05.1999 DE 19921866
(71) Anmelder: SIEMENS AKTIENGESELLSCHAFT, 80333 München (DE)
(72) Erfinder: Bollenbeck, Jan, 80469 München (DE)

(57) **Zusammenfassung**

Schaltungsanordnung (100) zur Verstärkung von phasen und amplitudenmodulierten HF-Signalen, insbesondere Sendeteil eines Mobilfunk-Endgerätes, mit einer nichtlinearen Leistungsverstärkerstufe (103) und Regelungsmitteln zur Linearisierung der Übertragungskennlinie, wobei die Regelungsmittel eine Amplitudenregelschleife (125, 129, 141) und eine von dieser im wesentlichen getrennte Phasenregelschleife (117, 119, 121, 123, 137, 139) mit einem einstellbaren Phasenschieber (115) umfassen.

## Beschreibung

Die Erfindung betrifft eine Schaltungsanordnung zur Verstärkung von phasen- und amplitudenmodulierten HF-Signalen, insbesondere realisiert im Sendeteil eines Mobilfunk-Endgerätes.

Die mobile Sprach- und Datenkommunikation ist ein sich explosionsartig entwickelndes technisches Gebiet mit weit überdurchschnittlichen wirtschaftlichen Perspektiven. Die wirtschaftliche Dynamik, die sich sehr plastisch in der von Jahr zu Jahr zu verzeichnenden Vervielfachung der Teilnehmerzahlen verdeutlichen läßt, erfordert die ständige Erschließung zusätzlicher technischer Möglichkeiten zur verbesserten Ausnutzung der verfügbaren Frequenzbereiche und zur möglichst weitgehenden Anpassung bzw. Verknüpfung verschiedener Systeme zu weltumspannend vereinheitlichten Zukunftslösungen.

Im Zuge der Definition neuer Standards, die dem steigenden Bedarf an der Übertragung großer Datenmengen Rechnung tragen müssen, wird zum Teil - anders als beispielsweise noch beim aktuellen GSM-Standard - der Einsatz von Modulationsverfahren mit nicht konstanter Hüllkurve, d.h. von z.B. kombinierten Phasen- und Amplitudenmodulationsverfahren, vorgesehen. So wird im Rahmen des UMTS-Standards eine QPSK-Modulation (Quadrature-Phase-Shift-Keying) vorgesehen, die ein solches Modulationsverfahren darstellt.

Die Verstärkung von derart modulierten HF-Signalen im Sendeteil eines Mobilfunk-Endgerätes muß mit relativ hoher Genauigkeit verzerrungsfrei, d.h. frei von Amplitudenverzerrungen infolge von Nichtlinearitäten der Verstärkerkennlinie sowie frei von Phasenverzerrungen, die durch den Vorgang der 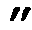 AM to PM-Conversion" hervorgerufen werden, erfolgen. Die in den Zukunfts-Mobilfunkstandards definierten digitalen Modulationsverfahren reagieren nämlich äußerst empfindlich auf verzerrungsbedingte Bitfehler. In den Systemstandards bzw. - spezifikationen sind daher strenge Vorschriften bezüglich der zulässigen Amplituden- und Phasenfehler und zudem der Nachbarkanalleistung (ACP = Adjacent Channel Power) enthalten. Eine nachteilige Auswirkung von Nichtlinearitäten der Verstärkerkennlinie des Endverstärkers besteht zudem in einer unerwünschten Aufweitung des Sendefrequenzspektrums durch Intermodulationseffekte (hauptsächlich dritter Ordnung).

Die erwähnten Systemspezifikationen können nur mit aufwendig auf hohe Linearität der Übertragungskennlinie hin optimierten Sendeverstärkern eingehalten werden, die den Einsatz kostspieliger Bauelemente erfordern sowie eine relativ hohe Stromaufnahme haben. Die hohen Bauelementkosten solcher Verstärker stehen im Widerspruch zur Forderung der Kostenminimierung, die auch bei hochwertigen Mobilfunk-Endgeräten und verstärkt noch bei der sogenannten 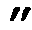 Low-Budget"-Produktklasse besteht. Die hohe Stromaufnahme steht im Widerspruch zur weiteren wesentlichen Entwicklungsforderung einer möglichst langen Sprechzeit und ist speziell bei Geräten, die nach dem UMTS-Standard arbeiten, von großem Nachteil, weil der Sender hier im Vollduplex in einem kontinuierlichen Modus betrieben wird.

Es ist bekannt, eine Linearisierung der Übertragungskennlinie eines nichtlinearen Verstärkers durch eine Vorverzerrung des modulierten Signals zu erreichen, mit der die nichtlineare Übertragungskennlinie invers nachgebildet wird, so daß aus der Überlagerung der realen und der invers nachgebildeten Übertragungskennlinie sich insgesamt eine annähernd lineare Übertragungsfunktion ergibt.

Es ist weiterhin bekannt, im Rahmen eines Vergleichs von Aus- und Eingangssignal durch geeignete Amplituden- und Phaseneinstellungen am Ausgang des Vergleichers nur die reinen Intermodulationsprodukte verfügbar zu haben und das Fehlersignal zur Erzielung einer Intermodulations-Gegenkopplung über geeignete Koppelelemente auf den Eingang des zu linearisierenden Verstärkers oder zur Realisierung einer Vorwärtskopplung (Feedforward) auf dessen Ausgang zu geben.

Es ist Aufgabe der Erfindung, eine neuartige und wirkungsvolle Schaltungsanordnung der gattungsgemäßen Art anzugeben, die insbesondere kostengünstig realisierbar und flexibel an verschiedene Spezifikationen anpaßbar ist.

Diese Aufgabe wird durch eine Schaltungsanordnung mit den Merkmalen des Anspruchs 1 gelöst.

Die Erfindung schließt den wesentlichen Gedanken ein, zwei getrennte Regelschleifen für die beiden Modulationskomponenten Phasen- und Amplitudenmodulation vorzusehen. Insbesondere wird das gleichzeitig phasen- und amplitudenmodulierte HF-Signal von der Amplitudenmodulation befreit, bevor es in der nichtlinearen Verstärkerstufe verstärkt wird - wobei während der Verstärkung die Ausgangssignal-Momentanamplitude durch Veränderung des Verstärkungsfaktors der Verstärkerstufe in einer Amplitudenregelschleife an die Eingangssignal-Momentanamplitude gekoppelt ist.

Mittels einer Phasenregelschleife (PLL = Phase-Locked-Loop) wird eine starre Synchronisation des Ausgangssignals mit dem Eingangssignal realisiert, d.h. in der Verstärkerstufe entstehende Phasenverschiebungen werden ausgeregelt. Kernstück der Phasenregelschleife ist ein VCO oder ein variabler Phasenschieber , dessen Steuereingang über ein Tiefpaßfilter (Loop-Filter) mit dem Ausgang eines Phasen-Detektors verbunden ist. Die Befreiung von der Amplitudenmodulation erfolgt am Eingang des Phasen-Detektors insbesondere über einen Nulldurchgangsdiskriminator bzw. -entscheider. Ein entsprechender Nulldurchgangsdiskriminator ist auch im mit dem Verstärkerausgang verbundenen Rückkopplungspfad vorgesehen.

Zur Sicherung eines zu seinem Arbeitspunkt symmetrischen Betriebs des variablen Phasenschiebers ist in einer bevorzugten Ausführung der Schaltungsanordnung am Eingang ein starrer Phasenschieber zur Einstellung der statischen Phasendrehung der Anordnung vorgesehen. Durch diese spezielle Anordnung wird erreicht, daß durch den variablen Phasenschieber lediglich der durch die Leistungsverstärkerstufe verursachte Phasenfehler korrigiert werden muß. Phasenänderungen, die bereits dem modulierten Eingangssignal eigen sind, liegen in gleicher Weise am Eingang der Leistungsverstärkerstufe und am Referenzeingang des Phasendetektors an und werden durch die PLL nicht beeinflußt. Aufgrund dessen muß der variable Phasenschieber nur einen relativ kleinen Phasenbereich überstreichen.

Die Amplitudenregelschleife weist einen ersten, mit dem Eingang der Anordnung verbundenen und einen zweiten, mit dem Ausgang der Leistungsverstärkerstufe verbundenen Hüllkurvendetektor auf, deren Ausgänge mit einer Amplituden-Vergleichereinheit (insbesondere einer Operationsverstärkerschaltung) verbunden sind, welche ihrerseits eine Steuereinrichtung zur Variation des Verstärkungsfaktors der Leistungsverstärkerstufe ansteuert.

Die erwähnte Auslegung der Amplitudenregelung - hier auch Leistungsregelung - ermöglicht eine ständige Ansteuerung der Detektoreingänge der beiden Teilschleifen mit demselben (wenn auch amplitudenmodulierten) HF-Pegel, unabhängig vom eingestellten Ausgangsleistungspegel. Die Detektoren müssen möglichst gleiche Kennlinien aufweisen, was sich am besten durch gepaarte und thermisch gekoppelte Bauelemente realisieren läßt. Hierfür sind Diodendetektoren, aber auch Synchrondetektoren einsetzbar, deren Injektionssignal aus dem Eingangssignal generiert wird.

In der bevorzugten Ausführung der vorgeschlagenen Schaltungsanordnung wird in der Leistungsverstärkerstufe (beispielsweise der Sendeendstufe eines Mobilfunk-Endgerätes) dem am Eingang von der Amplitudenmodulation befreiten Signal die Amplitudenmodulation wieder aufgeprägt. Alternativ hierzu kann die (erneute) Amplitudenmodulation auch an einem der Leistungsverstärkerstufe nachgeordneten Dämpfungsstellglied erfolgen.

Für ein nicht amplitudenmoduliertes Eingangssignal stellt die Amplitudenregelung eine reine Leistungsregelung dar, bei der der HF-Eingangspegel als Referenzpegel dient und die Ausgangsleistung der Leistungsverstärkerstufe über das Dämpfungsstellglied eingestellt wird. Die Schaltungsanordnung ist daher auch zur Verstärkung von Signalen mit konstanter Hüllkurve - wie etwa GMSK(Gaussian Minimum Shift Keying)-modulierten Signalen - geeignet und damit auch beispielsweise als Sendeendstufe eines Dualmode-Mobiltelefons. Ist das Eingangssignal hingegen amplitudenmoduliert, so folgt das Ausgangssignal, bedingt durch die Wirkung der Regelung, der AM.

Die getrennten Regelschleifen zur Phasen-/Frequenz- bzw. Amplitudenregelung haben eine gemeinsame Rückführung, die einen Leistungskoppler, das oben erwähnte Dämpfungsstellglied bzw. variable Dämpfungsglied und eine lineare (Kleinsignal-)Verstärkerstufe umfaßt.

Durch geeignete Wahl der Rückführungsverzweigung sowie der Dimensionierung der Loopfilter- und Regelbandbreiten (die im Rahmen fachgemäßen Handelns liegt) wird sichergestellt, daß Phasenverzerrungen im Zusammenhang mit der über die nichtlineare Leistungsverstärkerstufe aufgeprägten Amplitudenmodulation phasenrichtig ausgeregelt werden.

Die Anordnung wirkt für die AM-Komponente des (HF-)Eingangssignals als Tiefpaß und bewirkt daher, daß ein dem Eingangssignal überlagertes AM-Rauschen außerhalb der Amplitudenregelbandbreite unterdrückt wird. Eine modifizierte Anordnung mit einem VCO wirkt zusätzlich auch für die PM-Komponente des (HF-)Eingangssignals als Tiefpaß und bewirkt daher, daß ein dem Eingangssignal überlagertes PM-Rauschen außerhalb der Phasenregelschleifenbandbreite unterdrückt wird. Dies erleichtert den Einsatz von Direkt-Modulatoren (das Eingangssignal direkt auf der Endfrequenz modulierenden Modulationsstufen, die einen hohen Rauschpegel fernab der Nutzfrequenz aufweisen) speziell in sogenannten Vollduplex-Systemen der Mobilfunktechnik, bei denen die Sendeendstufe permanent in Betrieb ist und darauf geachtet werden muß, daß das Rauschen der Sendeendstufe nicht die Empfangsleistung beeinträchtigt.

Durch Verwendung eines geeigneten Sendeverstärkers (vorzugsweise im Klasse D-, Klasse E- oder Klasse F-Betrieb) sowie eines geeigneten Steuerverfahrens für die Steuerung der nichtlinearen Leistungsverstärkerstufe, beispielsweise mittels Steuerung der Drainspannung in einem FET-Verstärker, ist eine Optimierung des Wirkungsgrades über einen großen Dynamikbereich realisierbar.

Der Einsatz von Frequenzteilern vor dem Eingang des Phasen-/Frequenzdetektors (PFD) ermöglicht die Verwendung eines PFD mit eingeschränktem Betriebsfrequenzbereich.

Das Vorsehen von Dämpfungsgliedern vor den oben erwähnten Nullpunktdiskriminatoren in der Phasenregelschleife, welche die Wirkung von 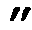 harten" Begrenzern haben, trägt zur Vermeidung von Rückwirkungen auf vorgeschaltete Stufen bei.

Vorteile und Zweckmäßigkeiten der Erfindung ergeben sich im übrigen aus den Unteransprüchen sowie der nachfolgenden Beschreibung bevorzugte Ausführungsformen anhand der Figuren. Von diesen zeigen:
- Fig. 1: ein Funktions-Blockschaltbild eines Abschnitts der Sendeendstufe eines Mobilfunk-Endgerätes gemäß einer ersten Ausführungsform und
- Fig. 2: ein Funktions-Blockschaltbild eines Abschnitts der Sendeendstufe eines Mobilfunk-Endgerätes gemäß einer weiteren Ausführungsform.

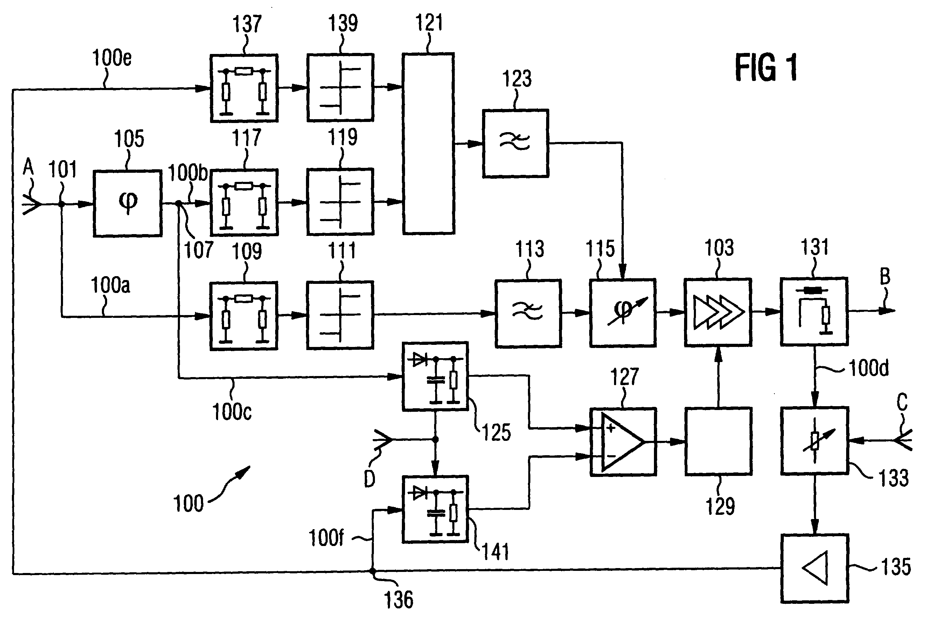

Fig. 1 zeigt in Form eines Funktions-Blockschaltbildes die für das Verständnis der Erfindung wesentlichen Komponenten der Sendeendstufe 100 eines Mobilfunk-Endgerätes in einer ersten Ausführungsform. An einen Eingang A liegt ein (beispielsweise gemäß dem QPSK-Verfahren moduliertes (gleichzeitig phasen- und amplitudenmoduliertes) HF-Eingangssignal an. An einem ersten Knoten 101 verzweigt sich der Signalpfad ein erstes Mal in einen ersten Eingangssignalpfad 100a der - über weitere, weiter unten erläuterte Komponenten - schließlich zum Eingang einer steuerbaren nichtlinearen Sendeverstärkerstufe 103 führt und zum Eingang eines starren Phasenschiebers 105, an dessen Ausgang der Signalpfad sich an einem zweiten Knoten 107 in einen zweiten und einen dritten Eingangssignalpfad 100b, 100c verzweigt.

Im ersten Eingangssignalpfad 100a ist ein erstes Dämpfungsglied 109 vorgesehen, dessen Ausgang mit dem Eingang eines ersten Nulldurchgangsdiskriminators 111 verbunden ist, der ausgangsseitig mit einem ersten Tiefpaßfilter 113 verbunden ist. Dessen Ausgang ist mit dem Eingang eines steuerbaren Phasenschiebers 115 verbunden, dessen Ausgang schließlich mit dem Eingang der oben erwähnten Sendeverstärkerstufe 103 verbunden ist.

Auch im zweiten Eingangssignalpfad 100b sind ein (zweites) Dämpfungsglied 117 und, eingangsseitig mit dessen Ausgang verbunden, ein (zweiter) Nulldurchgangsdiskriminator 119 angeordnet, dessen Ausgang mit einem ersten Eingang eines PD 121 verbunden ist. Dessen Eingang stellt gewissermaßen das Ende des zweiten Eingangssignalpfades dar, und sein Ausgang ist über ein zweites Tiefpaßfilter (Loop-Filter) 123 mit einem Steuereingang des steuerbaren Phasenschiebers 115 verbunden.

Im dritten Eingangssignalpfad 100c ist ein erster Hüllkurvendetektor 125 vorgesehen, der ausgangsseitig mit einem ersten Eingang einer als Vergleichereinrichtung wirkenden Operationsverstärkerschaltung 127 verbunden ist, an dem der dritte Eingangssignalpfad endet. Der erste Hüllkurvendetektor 125 hat einen Steuereingang D, an dem eine Detektor-Bias anliegt. Der Ausgang der Operationsverstärkerschaltung 127 ist mit einer Sendeverstärker-Steuerschaltung 129 verbunden, die über einen Steuereingang der Sendeverstärkerstufe deren Verstärkungsfaktor variiert.

Der Ausgang der Sendeverstärkerstufe 103 ist mit dem Ausgang eines Leistungskopplers 131 verbunden, der einerseits mit einem Antennenausgang B und andererseits mit dem Eingang eines variablen Dämpfungsgliedes bzw. Dämpfungsstellgliedes 133 verbunden ist, welches einen Leistungssteuereingang C hat. Über einen (linearen) Kleinsignalverstärker 135 mündet der erste Abschnitt 100d des Rückführungs-Signalpfades in einen dritten Knoten 136, wo sich der Signalpfad in einen zweiten Abschnitt 100e und einen dritten Abschnitt 100f verzweigt.

Der zweite Rückführungs-Signalpfadabschnitt 100e enthält ein drittes Dämpfungsglied 137, das ausgangsseitig mit dem Eingang eines dritten Nulldurchgangsdiskriminator 139 verbunden ist, welcher seinerseits mit einem zweiten Eingang des oben erwähnten PD 121 verbunden ist. Der dritte Rückführungs-Signalpfadabschnitt 100f umfaßt einen zweiten Hüllkurvendetektor 141, der ausgangsseitig mit einem zweiten Eingang der Operationsverstärkerschaltung 127 verbunden ist und den Steuereingang D mit dem ersten Hüllkurvendetektor 125 gemeinsam hat.

Die Funktionsweise der oben beschriebenen Schaltungsanordnung ergibt sich im wesentlichen bereits aus den vorangegangenen grundsätzlichen Erläuterungen zur Erfindung sowie der Bezeichnung der Funktionskomponenten, so daß auf eine detaillierte Erläuterung hier verzichtet werden kann. Es wird nur darauf hingewiesen, daß im Sinne der grundsätzlichen Ausführungen zur Erfindung die Signalpfade 100b und 100e mit den wesentlichen Funktionskomponenten zweiter und dritter Nulldurchgangsdiskriminator 119, 139 und PD 121 eine Phasenregelschleife bilden, welche getrennt von einer Amplitudenregelschleife ist, die die Signalpfade 100c und 100f und als wesentliche Funktionskomponenten die beiden Hüllkurvendetektoren 125, 141 und die Vergleichereinrichtung 127 mit nachgeschalteter Sendeverstärker-Steuerschaltung 129 umfaßt. Im weiteren Sinne umfaßt die Phasenregelschleife auch den variablen Phasenschieber 115, der über den PD 121 angesteuert wird, sowie die nichtlineare Sendeverstärkerstufe 103 selbst, die über die Sendeverstärker-Steuerschaltung 129 gesteuert wird, und in diesem weiteren Sinne sind Phasenregelschleife und Amplitudenregelschleife dann natürlich nicht mehr völlig getrennt, sondern haben einen Abschnitt des ersten Eingangssignalpfades 100a gemeinsam. Beiden Regelschleifen gemeinsam ist der Rückführungs-Signalpfadabschnitt 100d, der vom Leistungskoppler 131 abzweigt und dessen wesentliche Komponente das variable Dämpfungsglied 133 zur Einstellung der Ausgangsleistung ist.

Da die Momentanfrequenz am Eingang der Leistungsverstärkerstufe durch die PLL nicht beeinflußt wird, eignet sich die erwähnte Ausführung auch für Eingangssignale mit tiefen Amplitudeneinbrüchen (QPSK, Sprach-Einseitenbandmodulation mit unterdrücktem Träger).

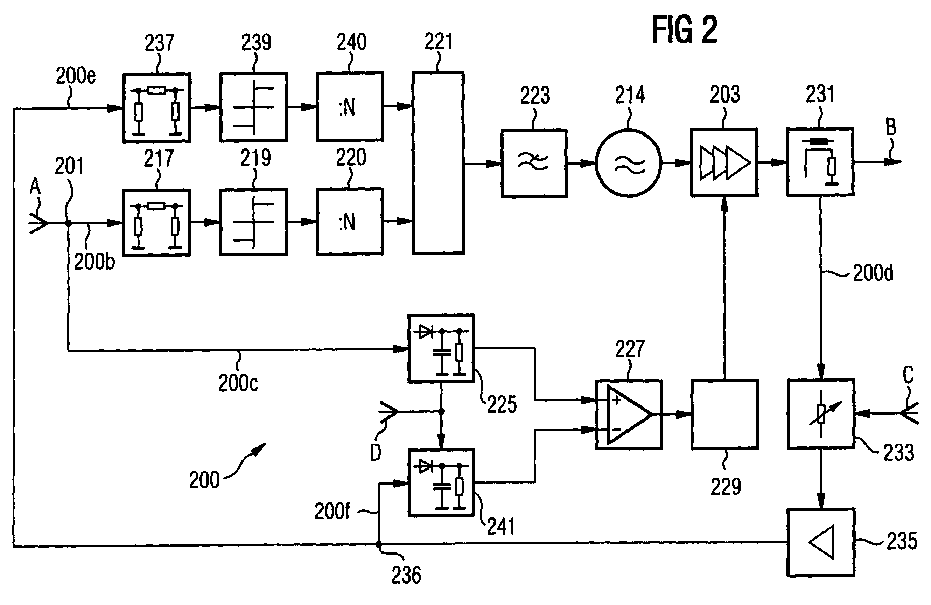

Fig. 2 zeigt in zu Fig. 1 analoger Weise das Funktions-Blockschaltbild einer zweiten, gegenüber der oben beschriebenen Anordnung modifizierten Ausführung einer Sendeendstufe 200. Zur Bezeichnung übereinstimmender Funktionskomponenten wurden - soweit möglich - zu Fig. 1 korrespondierende Bezugsziffern verwendet, und diese Komponenten werden hier nicht nochmals erläutert. (Es ist zu beachten, daß infolgedessen bei dieser Figur keine lückenlose Aufeinanderfolge der Bezugsziffern mehr gegeben ist.)

Ein erster Unterschied zur oben beschriebenen ersten Ausführungsform besteht im Fortfall des starren Phasenschiebers am Eingang der Anordnung, der für die Funktion der erfindungsgemäßen Lösung verzichtbar ist. Weiterhin erfolgt eine eingangsseitige Aufspaltung des Signalpfades in lediglich einen ersten und einen zweiten Eingangssignalpfad 200b, 200c, wodurch jeweils ein Dämpfungsglied und Nulldurchgangsdiskriminator entfällt. Dagegen ist im zweiten Eingangssignalpfad 200b sowie im zweiten Rückführungs-Signalpfadabschnitt 200e jeweils eine Teilerstufe (:N-Teiler) vorgesehen, womit die Verwendung eines PFD 221 mit eingeschränktem Betriebsfrequenzbereich ermöglicht werden kann.

Der im Zusammenhang mit der eigentlichen Erfindung wesentlichste Unterschied zur ersten Ausführung besteht im Einsatz eines spannungsgesteuerten Oszillators (VCO) 214 am Eingang der Sendeverstärkerstufe 203. Der VCO 214 wird vom Tiefpaßgefilterten Ausgangssignal eines Phasen-/Frequenz-Detektors (PFD) 221 angesteuert und ersetzt funktionell den steuerbaren Phasenschieber bei der ersten Ausführungsform.

Die Ausführung der Erfindung ist nicht auf die beschriebenen Beispiele beschränkt, sondern auch in einer Vielzahl von Abwandlungen möglich, die insbesondere den Einsatz von funktionsgleichen oder -ähnlichen Baugruppen anstelle der oben erwähnten Schaltungskomponenten einschließen.

## Patentansprüche

1. Schaltungsanordnung (100; 200) zur Verstärkung von phasen- und amplitudenmodulierten HF-Signalen, insbesondere Sendeteil eines Mobilfunk-Endgerätes, mit einer nichtlinearen Leistungsverstärkerstufe (103; 203) und Regelungsmitteln zur Linearisierung der Übertragungskennlinie,
**dadurch gekennzeichnet**, daß
die Regelungsmittel eine Amplitudenregelschleife (125, 129, 141; 225, 229, 241) und eine von dieser im wesentlichen getrennte Phasenregelschleife (117 bis 123, 137, 139; 217 bis 223, 237, 239), insbesondere mit einem einstellbaren Phasenschieber (115) oder VCO (214), umfassen und die Leistungsverstärkerstufe eine einstellbare Verstärkung aufweist.

2. Schaltungsanordnung nach Anspruch 1,
**dadurch gekennzeichnet**, daß
am Eingang der nichtlinearen Verstärkerstufe Mittel (111; 219) zur Amplitudenmodulationsbefreiung des HF-Signals vorgesehen sind und die nichtlineare Verstärkerstufe zur Reproduktion der Amplitudenmodulation über eine Leistungsverstärker-Steuerschaltung (129; 229) steuerbar ist und/oder ihr Mittel (133; 233) zur Reproduktion der Amplitudenmodulation nachgeschaltet sind.

3. Schaltungsanordnung nach Anspruch 2 oder 3,
**dadurch gekennzeichnet**, daß
die Amplitudenregelschleife (125, 129, 141; 225, 229, 241), einen ersten, mit einem Eingang (A) der Schaltungsanordnung (100; 200) verbundenen Hüllkurvendetektor (125; 225) und einen zweiten, mit dem Ausgang der nichtlinearen Verstärkerstufe (103; 203) verbundenen Hüllkurvendetektor (141; 241) sowie eine mit den Ausgängen des ersten und zweiten Hüllkurvendetektors verbundene Amplituden-Vergleichereinheit (127; 227) aufweist.

4. Schaltungsanordnung nach einem der vorangehenden Ansprüche,
**dadurch gekennzeichnet**, daß
die Phasenregelschleife (117 bis 123, 137, 139; 217 bis 223, 237, 239) einen ersten, mit dem Eingang (A) der Schaltungsanordnung (100; 200) verbundenen Nulldurchgangsdiskriminator (119; 219) und einen zweiten, mit dem Ausgang der nichtlinearen Verstärkerstufe (103; 203) verbundenen Nulldurchgangsdiskriminator (139; 239) sowie einen mit den Ausgängen des ersten und zweiten Nulldurchgangsdiskriminators verbundenen Phasen-/Frequenz-Detektor (121; 221) aufweist.

5. Schaltungsanordnung nach einem der vorangehenden Ansprüche,
**dadurch gekennzeichnet**, daß
am Eingang der Phasenregelschleife (117 bis 123, 137, 139; 217 bis 223, 237, 239) ein starrer Phasenschieber (105) zur Voreinstellung der statischen Phasendrehung der Schaltungsanordnung (100) vorgesehen ist.

6. Schaltungsanordnung nach einem der vorangehenden Ansprüche,
**dadurch gekennzeichnet**, daß
am Ausgang der nichtlinearen Verstärkerstufe (103; 205) ein einstellbares Dämpfungsglied (133; 233) zur Einstellung der Ausgangsleistung vorgesehen ist.

7. Schaltungsanordnung nach einem der vorangehenden Ansprüche,
**dadurch gekennzeichnet**, daß
der Amplitudenregelschleife (125, 129, 141; 225, 229, 241) und der Phasenregelschleife (117 bis 123, 137, 139; 217 bis 223, 237, 239) ein vom Ausgang der nichtlinearen Verstärkerstufe (103) abgehender Rückführungs-Signalpfadabschnitt (100d; 200d) gemeinsam zugeordnet ist, welche insbesondere einen Leistungskoppler (131; 231) aufweist.
